# EUROPÄISCHE PATENTANMELDUNG

(11) **EP 2 328 086 A1**
(43) Veröffentlichungstag der Anmeldung: **01.06.2011**
(21) Anmeldenummer: 10015006.9
(22) Anmeldetag: 25.11.2010
(51) Int. Cl.: G06F 9/46, G06F 9/48

(54) **Verfahren zum Priorisieren von Kommandos auf einem tragbaren Datenträger**

(30) Priorität: 27.11.2009 DE 102009056146
(71) Anmelder: Giesecke & Devrient GmbH, 81677 München (DE)
(72) Erfinder: Köglmeier, Helmut, 81547 München (DE)

(57) **Zusammenfassung**

Die Erfindung beschreibt ein Verfahren zum Priorisieren von Kommandos (K1, K2) jeweiliger Anwendungsapplikationen auf einem tragbaren Datenträger, insbesondere einer Java Card, bei dem ein erstes, Java-gebundenes Kommando (K1) für die Ausführung eines zweiten Kommandos (K2) unterbrochen wird, wenn das zweite Kommando (K2) ein nicht Java-gebundenes Kommando ist.

## Beschreibung

Die Erfindung betrifft ein Verfahren zum Priorisieren von Kommandos auf einem tragbaren Datenträger. Insbesondere handelt es sich bei diesem Datenträger um eine Java Card.

Als Dual- oder Multi-Interface-Karten werden Datenträger bezeichnet, welche über zwei oder mehr Schnittstellen verfügen. Diese Schnittstellen können in beliebiger Weise, kontaktbehaftet oder kontaktlos, ausgebildet sein. Da über mehrere der Schnittstellen gleichzeitig Kommandos empfangen werden können, muss bei derartigen tragbaren Datenträgern dafür Sorge getragen werden, in welcher Weise die Kommandos abgearbeitet werden.

Eine Java Card bezeichnet einen Datenträger, insbesondere eine Chipkarte, mit einem Mikrocontroller, die unter anderem eine Java Card Virtual Machine und eine Java Card Runtime Environment besitzt. Sie besitzt die Eigenschaft, Programme in Java zu verwalten und ausführen zu können.

In als Java Card ausgebildeten tragbaren Datenträgern, insbesondere solchen mit Java Card Version 2.xx oder 3.0 Classic, müssen Java-gebundene Kommandos serialisiert werden. Die Kommandos sind sog. APDU-Kommandos, d.h. Kommandos, zu deren Ausführung Java-Code durchlaufen wird. APDU steht für Application Protocol Data Unit. Dies bedeutet, wenn bei einer Multi-Interface-Karte ein auf einer ersten Schnittstelle (Interface) empfangenes APDU-Kommando sich bereits in der Ausführung befindet, muss die Bearbeitung eines auf einer zweiten Schnittstelle empfangenen APDU-Kommandos verschoben werden, bis das erste APDU-Kommando der ersten Schnittstelle vollständig bearbeitet ist. Dieses Vorgehen ist durch die Java Card-Spezifikationen der Versionen 2.xx bzw. 3.0 Classic erzwungen.

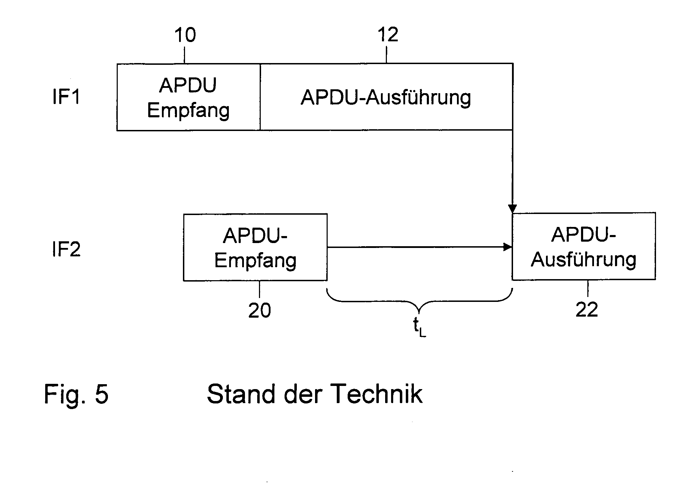

In Fig. 5 ist exemplarisch die serialisierte Ausführung von APDU-Kommandos und die daraus entstehende lange Latenz einer Transaktion dargestellt. Über eine erste Schnittstelle IF1 eines Datenträgers, welche beispielsweise ein kontaktbehaftetes Interface gemäß ISO/IEC 7816-3 darstellt, wird ein APDU-Kommando 10 empfangen. Dieses wird unmittelbar nach Empfang ausgeführt (Bezugszeichen 12). Während des Empfangs des APDU-Kommandos 10 über die erste Schnittstelle IF1 wird über eine zweite Schnittstelle IF2, welche beispielsweise eine kontaktlose NFC-Schnittstelle gemäß dem Single Wireless Protocol (SWP) ist, ein APDU-Kommando 20 empfangen. Die Ausführung bzw. Verarbeitung dieses Kommandos 20 kann erst nach Beendigung der Ausführung des APDU-Kommandos 10 erfolgen, was mit dem Bezugszeichen 22 illustriert ist. Hierdurch entsteht die mit t_{L} gekennzeichnete Latenzzeit.

Kontaktlos-Transaktionen (im in Fig. 5 aufgeführten Beispiel diejenigen, welche über die zweite Schnittstelle IF2 erfolgen) sollen typischerweise innerhalb von weniger als 100 ms abgearbeitet werden, um einen Abbruch der Transaktion durch das Herausnehmen des Datenträgers aus dem Feld zu vermeiden. Sofern sich beim Empfang eines APDU-Kommandos von der kontaktlosen Schnittstelle bereits ein APDU-Kommando von der anderen Schnittstelle in Bearbeitung befindet und diese Bearbeitung etwas länger dauert, können diese Zeitvorgaben nicht eingehalten werden. Dies ist beispielsweise bei sog. Touch & Go-Anwendungen, wie z.B. bei Benutzung einer kontaktlosen Fahrkartenapplikation an einer Durchgangssperre mit Kontaktlos-Lesegerät, unerwünscht.

Das geschilderte Problem kann jedoch nicht nur bei einer kontaktlosen und einer kontaktbehafteten Schnittstelle eines tragbaren Datenträgers auftreten, sondern stellt sich gleichermaßen bei beliebigen Schnittstellen des Datenträgers mit mehreren Schnittstellen.

Aus der DE 10 2006 021 087 A1 ist es bekannt, eine Datenkommunikation einer ersten Schnittstelle zu unterbrechen, um eine zweite Datenkommunikation aufzunehmen. Durch eine Sequenzialisierung werden die konkurrierenden Datenkommunikationen durch wechselweises Unterbrechen der einen und Beginnen der anderen Datenkommunikation zu Ende geführt. Durch die Sequenzialisierung wird der Betrieb der Schnittstellen derart koordiniert, dass eine sequentielle Bearbeitung der simultanen Datenkommunikationen ermöglicht wird. Hierdurch ist ein Quasi-Multitasking realisiert.

Aus der DE 10 2004 034 408 A1 ist ein Verfahren bekannt, bei dem der kontaktlose Betrieb eines Datenträgers vorrangig von dem kontaktbehafteten Betrieb des Datenträgers abläuft.

Es ist Aufgabe der vorliegenden Erfindung, ein Verfahren sowie einen tragbaren Datenträger anzugeben, welche eine verbesserte Abarbeitung von Kommandos konkurrierender Anwendungsapplikationen erlauben.

Diese Aufgaben werden gelöst durch ein Verfahren gemäß den Merkmalen des Patentanspruchs 1 sowie einen tragbaren Datenträger gemäß den Merkmalen des Patentanspruchs 11. Vorteilhafte Ausgestaltungen ergeben sich aus den abhängigen Patentansprüchen.

Die Erfindung schafft ein Verfahren zum Priorisieren von Kommandos jeweiliger Anwendungsapplikationen auf einem tragbaren Datenträger, insbesondere einer Java Card, bei dem ein erstes, Java-gebundenes Kommando für die Ausführung eines zweiten Kommandos unterbrochen wird, wenn das zweite Kommando ein nicht Java-gebundenes Kommando ist.

Der Begriff Anwendungsapplikation ist in der gesamten Anmeldung synonym zu dem Begriff Anwendungsprogramm verwendbar und unterscheidet sich von Systemprogrammen, die den nativen Betriebssystemteil betreffen. Das heißt, diese Anmeldung setzt auf der Anwendungsebene des ISO-Schichtmodells auf. Die Anwendungsapplikationen sind somit Benutzerspezifisch und keines Falls Systemapplikationen. Es wird hierin explizit darauf hingewiesen, dass eine Anwendungsapplikation, die auf nativen Code zurückgreift zu unterscheiden ist von einem Systemprogramm, welches auf nativen Code zurückgreift.

Somit ist ein Java-gebundenes Kommando ein Kommando, welches eine in Java programmierte Anwendungsapplikation aufruft. Hingegen ist ein Nicht-Javagebundenes Kommando ein Kommando, welches eine Applikation aufruft, die nicht in Java programmiert ist.

Das Verfahren zum Priorisieren wägt demnach jedes empfangene Kommando dahingehen ab, ob es ein Java-gebundenes oder ein Nicht-Java-gebundenes Kommando ist. Entsprechend der Abwägung erfolgt eine Priorisierung derjeniger Anwendungsapplikationen, die durch nicht-Java-gebundene Kommandos aufgerufen werden.

In entsprechender Weise schlägt die Erfindung einen tragbaren Datenträger, insbesondere eine Java Card, vor, der dazu ausgebildet ist, ein erstes, Java-gebundenes Kommando einer Anwendungsapplikation für die Ausführung eines zweiten Kommandos einer anderen Anwendungsapplikation zu unterbrechen, wenn das zweite Kommando ein nicht Java-gebundenes Kommando ist.

Hierdurch können Latenzzeiten bei zeitkritischen Kommandos durch gerade laufende Kommandobearbeitung vermieden werden. Hierdurch können Zeitvorgaben eingehalten werden, wie diese insbesondere bei Kommandos über eine kontaktlose Schnittstelle an den tragbaren Datenträger formuliert werden.

Zweckmäßigerweise wird die Ausführung des ersten, Java-gebundenen Kommandos unterbrochen, wenn das zweite, nicht Java-gebundene Kommando eine höhere Priorität als das erste Kommando aufweist. Hierdurch kann auf einfache Weise ein Zugriff auf eine gemeinsame Ressource konfliktfrei ermöglicht werden.

Zweckmäßigerweise wird das erste, Java-gebundene Kommando fortgesetzt, wenn die Ausführung des zweiten, nicht Java-gebundenen Kommandos beendet ist.

Insbesondere wird die Ausführung des zweiten, nicht Java-gebundenen Kommandos unmittelbar nach deren Empfang gestartet. Hierdurch ist die Verkürzung der Latenzzeit bei dem zweiten, zeitkritischen Kommando durch die Unterbrechung des ersten Kommandos ermöglicht.

Die Unterbrechung des ersten, Java-gebundenen Kommandos wird durch eine Interrupt-Service-Routine oder ein Prioritätsscheduling-Verfahren herbeigeführt.

Zweckmäßigerweise wird eine Ressource des tragbaren Datenträgers, die durch das erste, Java-gebundene Kommando und das zweite, nicht Java-gebundene Kommando genutzt wird, vor einem wechselweisen, d.h. verschachtelten, Zugriff geschützt. Der Schutz vor wechselweisem Zugriff kann beispielsweise durch eine Mutex erfolgen. Alternativ kann der Schutz vor wechselweisem Zugriff durch ein Prioritätenmanagement erfolgen. Die zugreifenden Funktionen (Kommandos) können mit derselben Priorität wie die zeitkritischen nicht Java-gebundenen Kommandos in einer Interrupt-Service-Routine oder in einem Prioritätenscheduling laufen, wobei die Priorität dieser Funktionen höher gewählt ist als die der Java-gebundenen Kommandos. Hierbei muss Vorsorge getroffen werden, dass sich die Aktivitäten, d.h. die Interrupt-Service-Routinen oder die Tasks im Prioritätenscheduling, innerhalb derselben Prioritäten nicht unterbrechen, sondern nacheinander ausgeführt werden.

Gemäß einer weiteren Ausgestaltung weist der tragbare Datenträger eine erste Schnittstelle und eine zweite Schnittstelle auf. Der ersten Schnittstelle wird eine erste, niedrige Priorität und der zweiten Schnittstelle eine zweite, hohe Priorität zugewiesen. Dem Datenträger wird das erste, Java-gebundene Kommando über die erste Schnittstelle und das zweite nicht Java-gebundene Kommando über die zweite Schnittstelle zugeführt. Die erste Schnittstelle ist beispielsweise eine kontaktbehaftete Schnittstelle. Die zweite Schnittstelle kann eine kontaktlose Schnittstelle oder eine kontaktbehaftete Schnittstelle darstellen, die in Verbindung mit einem externen, kontaktlosen Chip und einer externen Antenne ebenfalls eine kontaktlose Schnittstelle darstellt. Dabei ist den jeweiligen Schnittstellen eine Priorität zugeordnet, welche zu einer priorisierten Behandlung der an den jeweiligen Schnittstellen empfangenen Kommandos führt.

Durch die erste Schnittstelle wird zweckmäßigerweise ein erstes Betriebssystem, insbesondere Java Card Runtime Environment, und durch die zweite Schnittstelle ein zweites Betriebssystem, insbesondere DESFire, verwendet, welche zur Unterbrechung des ersten, Java-bezogenen Kommandos voneinander separiert werden oder gegenseitig verriegelt werden.

Die Erfindung wird nachfolgend näher anhand von Ausführungsbeispielen in der Zeichnung näher erläutert. Es zeigen:
- Fig.1: den zeitlichen Ablauf der Unterbrechung eines Java-gebundenen Kommandos an einer ersten Schnittstelle durch ein nicht Javagebundenes Kommando an einer zweiten Schnittstelle,
- Fig. 2: den zeitlichen Ablauf der Unterbrechung eines Java-gebundenen Kommandos durch ein weiteres nicht Java-gebundenes Kommando von einer anderen Schnittstelle,
- Fig. 3: eine beispielhafte schematische Systemkonfiguration mit einer Dual-Interface-Karte und einem externen Kontaktlos-Chip mit Antenne, in welcher das erfindungsgemäße Verfahren zur Anwendung gelangen kann,
- Fig. 4: eine schematische Darstellung einer weiteren Dual-Interface-Karte, anhand der ein mögliches Anwendungsszenario erläutert wird, und
- Fig. 5: den zeitlichen Ablauf einer serialisierten Ausführung zweier über unterschiedliche Schnittstellen empfangenen Kommandos mit der daraus entstehenden langen Latenzzeit gemäß dem Stand der Technik.

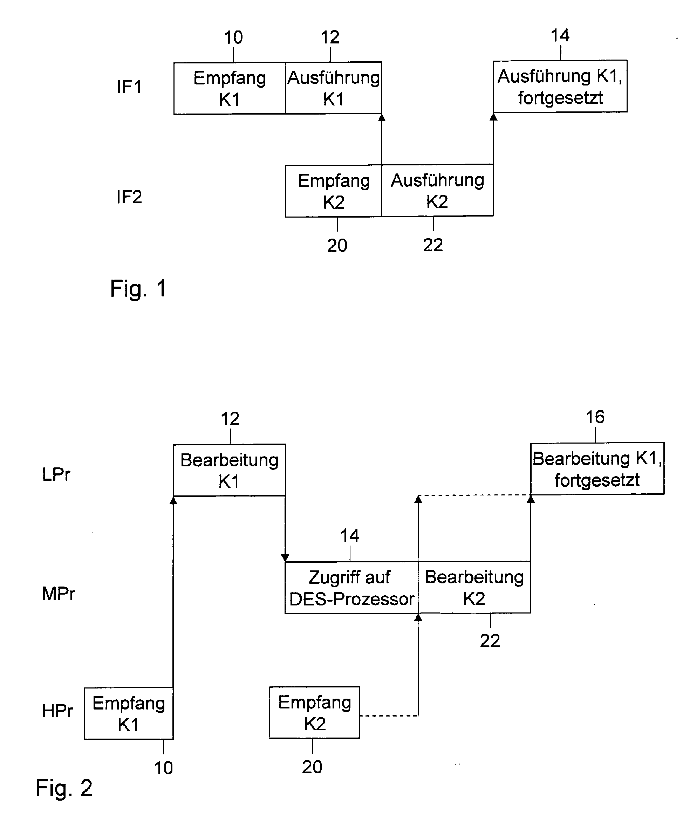

Fig.1 zeigt den zeitlichen Ablauf der Verarbeitung zweier, über unterschiedliche Schnittstellen IF1, IF2 empfangener Kommandos. Bei der ersten Schnittstelle 1F1 handelt es sich beispielsweise um ein kontaktbehaftetes Interface gemäß ISO/ IEC 7816-3. Bei der zweiten Schnittstelle IF2 kann es sich ebenfalls um ein kontaktbehaftetes Interface handeln, welches optional in Verbindung mit einem externen Kontaktlos-Chip (einem sog. Contactless Frontend - CLF) und einer externen Antenne eine Kontaktlos-Schnittstelle darstellt. Ebenso kann die zweite Schnittstelle unmittelbar eine kontaktlose Schnittstelle darstellen, wie z.B. ein NFC-Interface, welche Daten über das Single Wireless Protocol (SWP) verarbeitet.

Über die erste Schnittstelle IF1 wird ein erstes, Java-gebundenes Kommando K1 empfangen (Bezugszeichen 10). Nach dem vollständigen Empfang des ersten Kommandos K1 wird in 12 die Ausführung des ersten, Java-gebundenen Kommandos K1 begonnen. Bereits während des Empfangs des ersten, Java-gebundenen Kommandos K1 wird über die zweite Schnittstelle IF2 ein zweites, nicht Java-gebundenes Kommando K2 empfangen (Bezugszeichen 20). Nach Empfang dieses zweiten, nicht Java-gebundenen Kommandos K2 wird dessen sofortige Ausführung gestartet (Bezugszeichen 22), weswegen die Ausführung des ersten, Java-gebundenen Kommandos K1 in 12 unterbrochen wird. Erst nach Beendigung der Ausführung des zweiten, nicht Java-gebundenen Kommandos K2 wird die Ausführung des ersten, Java-gebundenen Kommandos K1 fortgesetzt (Bezugszeichen 14).

Nicht Java-gebundene Kommandos der üblicherweise zeitkritischeren zweiten Schnittstelle IF2 verwenden entweder nur Betriebssystemfunktionen, die reentraent sind und/ oder alternativ ein eigenes Betriebssystem haben. Nicht Java-gebundene Kommandos verwenden keinesfalls Java-Objekte oder deren native Implementierungen.

Der sofortige Start eines nicht Java-gebundenen Kommandos - unabhängig von einer eventuell gerade laufenden Bearbeitung eines anderen Kommandos der anderen Schnittstelle ― kann durch die Ausführung in einer Interrupt-Service-Routine oder durch ein Prioritätsscheduling erreicht werden.

Ressourcen, die von Kommandos beider Schnittstellen IF1, IF2 aus bzw. sowohl von Java-gebundenen Kommandos als auch von nicht Java-gebundenen Kommandos aus benutzt werden, wie z.B. eine zentrale NVM-Schreibroutine oder ein DES-Coprozessor, werden vor einem verschachtelten Zugriff geschützt. Dies kann durch Mechanismen wie einen Mutex erfolgen. Alternativ laufen die zugreifenden Funktionen mit derselben Priorität wie die zeitkritischen nicht Java-gebundenen Kommandos in einer Interrupt-Service-Routine oder im Prioritätsscheduling, wobei diese Priorität höher gewählt wird als die Priorität der Java-gebundenen Kommandos. Hierbei muss sichergestellt sein, dass sich die Aktivitäten (d.h. Interrupt-Service-Routinen oder Tasks im Prioritätsscheduling) innerhalb derselben Priorität nicht unterbrechen oder nacheinander ausgeführt werden.

Dies ist exemplarisch in Fig. 2 dargestellt, in welcher wiederum der zeitliche Ablauf des Empfangs zweier Kommandos über zwei Schnittstellen dargestellt ist. Den einzelnen Verarbeitungsschritten eines jeweiligen Kommandos ist dabei eine jeweilige Priorität zugewiesen. Mit LPr ist eine niedrigste Priorität gekennzeichnet, welche beispielsweise der Ausführung von Java-gebundenen Kommandos zugewiesen ist. Mit MPr ist eine mittlere Priorität gekennzeichnet, welche der Ausführung von nicht Java-gebundenen Kommandos sowie dem Zugriff auf gemeinsame Ressourcen des Datenträgers zugewiesen ist. Eine höchste Priorität HPr ist der Kommunikation, d.h. dem Empfang von Kommandos, zugewiesen.

Mit dem Bezugszeichen 10 wird ein erstes, Java-gebundenes Kommando K1 empfangen. Der Empfang erfolgt mit höchster Priorität HPr. In Schritt 12 erfolgt die Bearbeitung des Java-gebundenen Kommandos K1 mit niedrigster Priorität LPr. Während der Bearbeitung des Java-gebundenen Kommandos K1 wird über eine zweite Schnittstelle ein zweites, nicht Java-gebundenes Kommando K2 empfangen (Bezugszeichen 20). Der Empfang erfolgt wieder mit höchster Priorität HPr. Der Empfang dieses zweiten, nicht Java-gebundenen Kommandos K2 überschneidet sich dabei mit dem Zugriff auf einen DES-Prozessor, welcher durch die Bearbeitung des ersten, Java-gebundenen Kommandos K1 ausgelöst ist. Da die Ausführung von nicht Java-gebundenen Kommandos und der Zugriff auf gemeinsame Ressourcen eine gleiche, mittlere Priorität (MPr) aufweisen, beginnt die Bearbeitung des zweiten, nicht Java-gebundenen Kommandos K2 (Bezugszeichen 22) erst nach Beendigung des Zugriffs auf den DES-Prozessor. Während der Bearbeitung des zweiten, nicht Java-gebundenen Kommandos K2 wird die Bearbeitung des ersten, Java-gebundenen Kommandos K1 unterbrochen. Erst nach Beendigung der Bearbeitung bzw. Ausführung des nicht Java-gebundenen Kommandos K2 wird die Bearbeitung des ersten, Java-gebundenen Kommandos K1 (Bezugszeichen 16) fortgesetzt.

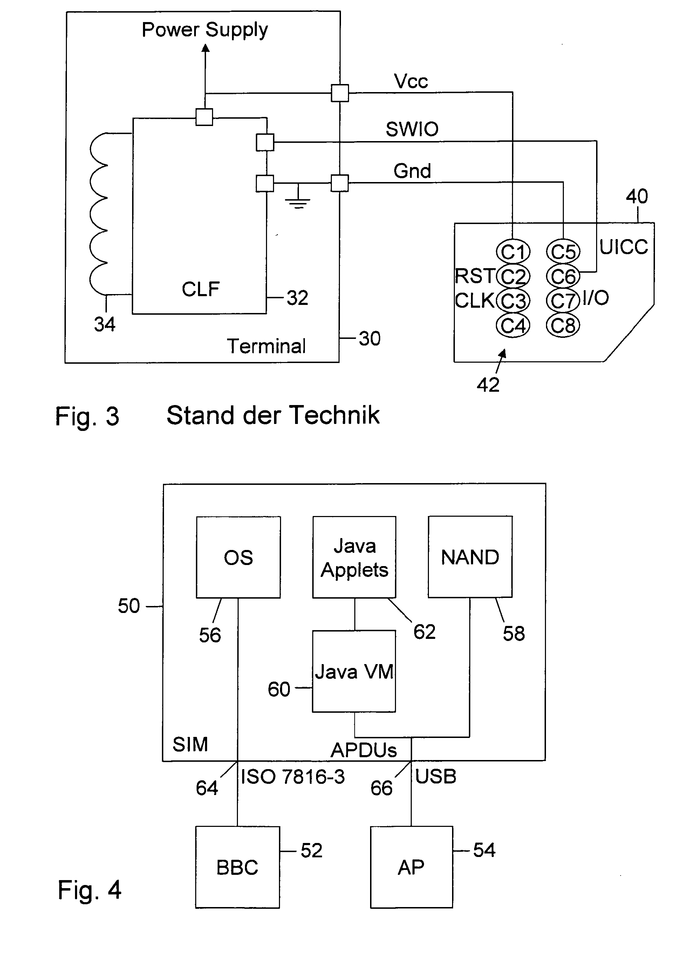

Das erfindungsgemäße Verfahren ist auf Dual-Interface-Karten anwendbar, bei denen beide Schnittstellen kontaktbehaftet ausgebildet sind, eine der beiden Schnittstellen jedoch priorisiert sein soll, da sie z.B. zusammen mit einem externen Kontaktlos-Chip, einem sog. Contactless Frontend (CLF), und einer externen Antenne eine Kontaktlos-Schnittstelle darstellt. Eine derartige, aus dem Stand der Technik prinzipiell bekannte Konfiguration ist exemplarisch in Fig. 3 dargestellt.

Mit 40 ist ein erfindungsgemäßer tragbarer Datenträger (Universal Integrated Chip Card - UICC) gekennzeichnet, welcher in bekannter Weise eine Anzahl an Anschlüssen C1, ..., C8 aufweist, welche mit dem gemeinsamen Bezugszeichen 42 gekennzeichnet sind. Eine kontaktlose Schnittstelle gemäß ISO/IEC 7816-3 ist zur Vereinfachung als nicht angeschlossen eingezeichnet, wird jedoch mit den Anschlüssen C2 (RST), C3 (CLK) und C7 (I/ O) verbunden. Eine sog. SWP-Schnittstelle ist über die Leitung SWIO mit einem Kontaktlos-Chip (dem bereits erwähnten Contactless Frontend CLF) eines Terminals 30 verbunden. Der Kontaktlos-Chip 32 ist mit einer Antenne 34 gekoppelt, wodurch dem Datenträger 40 eine kontaktlose Schnittstelle bereitgestellt ist. Sowohl die SWP-Schnittstelle als auch die herkömmliche, kontaktbehaftete Schnittstelle können durch den Datenträger 40 gleichzeitig benutzt werden.

Die von den beiden Schnittstellen verwendeten Betriebsystemteile, z.B. Java Card Runtime Environment und DESFire Operating System, werden soweit voneinander separiert bzw. gegenseitig verriegelt, dass ein Unterbrechen eines APDU-gebundenen Kommandos ermöglicht ist. Grundsätzlich wird die langsamere und weniger zeitkritische Java-gebundene Kommandobearbeitung von einem zeitkritischen nicht Java-gebundenen Kommando (z.B. DESFire-APDUs) unterbrochen, da der Datenträger in der Praxis nur eine geringe Verweildauer im Kontaktlos-Feld beim Durchschreiten einer Ticketkontrolle aufweist. Grundsätzlich funktioniert das Vorgehen jedoch auch umgekehrt.

Unter Bezugnahme auf Fig. 4 wird ein weiterer Anwendungsfall beschrieben, der die Verwendung des erfindungsgemäßen Verfahrens bei einem tragbaren Datenträger mit zwei kontaktbehafteten Schnittstellen erläutert. In einem modernen Mobiltelefon befinden sich in der Regel neben anderen Bausteinen zwei Prozessoren:
1. Der sog. Baseband Controller BBC (52), der im Wesentlichen die Telekommunikations-Funktionalität, wie z.B. Telefonbuch, PIN-Prüfung, Netz-Authentisierung usw., abwickelt.
2. Der sog. Application Processor AP (54), der Applikationen abarbeitet, wie z.B. Speicherzugriffe auf einen NAND-Speicher für Branding oder Java-Midlets, die gegebenenfalls mit einem Java-Applet auf einer SIM-Karte zusammenarbeiten.

Bislang benutzen beide Prozessoren 52, 54 zur Kommunikation mit der SIM-Karte 50 ausschließlich eine gemeinsame Schnittstelle nach ISO/ IEC 7816-3 (Bezugszeichen 64). Es ist angedacht, als zusätzliche Schnittstelle zur SIM-Karte 50 eine USB-Schnittstelle (66) einzuführen. Hierbei ist die Aufteilung wie folgt:
- Der Baseband Controller 52 verwendet die auf APDU-Kommandos basierte Schnittstelle gemäß ISO/IEC 7816-3.
- Der Application Processor 54 verwendet die USB-Schnittstelle 66. Die Kommandos dort können wahlweise Java-gebunden (APDU-basiert) sein, wie z.B. bei der Kommunikation zwischen einem Midlet im Application Processor 54 und einem Java-Applet 62 auf der SIM-Karte 50, oder nicht Java-gebunden (nicht APDU-basiert) sein, wie z.B. Zugriffe auf den NAND-Speicher 58.

In einem Anwendungsfall kommuniziert ein Java-Midlet im Application Processor 54 über die USB-Schnittstelle 66 mit einem Java-Applet 62 auf der SIM-Karte 50 und verwendet dazu das APDU-Format, z.B. verpackt in die USB-Klassen CCID/ICCD oder ähnliches. Während der Bearbeitung dieses APDU-Kommandos unter Verwendung der Java Virtual Machine sendet ein Mobilfunk-Rechner ein Authentisierungskommando über den Baseband Controller 52 und die Schnittstelle gemäß ISO/IEC 7816-3 an die SIM-Karte 50. Derartige Authentisierungskommandos müssen in einer relativ kurzen Zeit, typischerweise weniger als zwei Sekunden, beantwortet werden. Ansonsten wird die SIM-Karte und das Mobiltelefon aus dem Mobilfunknetz abgemeldet und es muss sich erst erneut anmelden, z.B. durch Aus- und Einschalten des Telefons. In diesem Fall könnte die SIM-Karte 50 das Authentisierungskommando bevorzugt abhandeln, da es die Java Virtual Machine nicht benötigt.

### Bezugszeichenliste

- K1: erstes Kommando
- K2: zweites Kommando
- IF1: erste Schnittstelle
- IF2: zweite Schnittstelle
- LPr: niedrige Priorität
- MPr: mittlere Priorität
- HPr: hohe Priorität
- t_{L}: Latenzzeit
- 10: Verfahrensschritt
- 12: Verfahrensschritt
- 14: Verfahrensschritt
- 16: Verfahrensschritt
- 20: Verfahrensschritt
- 22: Verfahrensschritt
- 30: Terminal
- 32: Contactless Frontend
- 34: Antenne
- 40: Datenträger
- 42: Anschlüsse
- 50: Datenträger (SIM-Karte)
- 52: Prozessor
- 54: Prozessor
- 56: Betriebssystem
- 58: Speicher
- 60: Java Virtual Machine
- 62: Java Applets
- 64: Schnittstelle
- 66: Schnittstelle

## Patentansprüche

1. Verfahren zum Priorisieren von Kommandos (K1, K2) jeweiliger Anwendungsapplikationen auf einem tragbaren Datenträger, insbesondere einer Java Card, bei dem ein erstes, Java-gebundenes Kommando (K1) für die Ausführung eines zweiten Kommandos (K2) unterbrochen wird, wenn das zweite Kommando (K2) ein nicht Java-gebundenes Kommando ist.

2. Verfahren nach Anspruch 1, bei dem die Ausführung des ersten, Java-gebundenen Kommandos (K1) unterbrochen wird, wenn das zweite, nicht Java-gebundene Kommando (K2) eine höhere Priorität als das erste Kommando (K1) aufweist.

3. Verfahren nach Anspruch 1 oder 2, bei dem das erste, Java-gebundene Kommando (K1) fortgesetzt wird, wenn die Ausführung des zweiten, nicht Java-gebundenen Kommandos (K2) beendet ist.

4. Verfahren nach einem der vorhergehenden Ansprüche, bei dem die Ausführung des zweiten, nicht Java-gebundenen Kommandos (K2) unmittelbar nach deren Empfang gestartet wird.

5. Verfahren nach einem der vorhergehenden Ansprüche, bei dem die Unterbrechung des ersten, Java-gebundenen Kommandos (K1) durch eine Interrupt-Service-Routine oder ein Prioritätsscheduling-Verfahren herbeigeführt wird.

6. Verfahren nach einem der vorhergehenden Ansprüche, bei dem eine Ressource des tragbaren Datenträgers, die durch das erste, Java-gebundene Kommando (K1) und das zweite, nicht Java-gebundene Kommando (K2) genutzt wird, vor einem wechselweisen Zugriff geschützt wird.

7. Verfahren nach Anspruch 6, bei dem der Schutz vor wechselweisem Zugriff durch einen Mutex erfolgt.

8. Verfahren nach Anspruch 6, bei dem der Schutz vor wechselweisem Zugriff durch ein Prioritätenmanagement erfolgt.

9. Verfahren nach einem der vorhergehenden Ansprüche, bei dem der tragbare Datenträger eine erste Schnittstelle (IF1) und eine zweite Schnittstelle (IF2) aufweist, wobei der ersten Schnittstelle (IF1) eine erste, niedrige Priorität und der zweiten Schnittstelle (IF2) eine zweite, hohe Priorität zugewiesen wird, und wobei dem Datenträger das erste, Java-gebundene Kommando (K1) über die erste Schnittstelle (IF1) und das zweite, nicht Java-gebundene Kommando (K2) über die zweite Schnittstelle (IF2) zugeführt wird.

10. Verfahren nach Anspruch 9, bei dem durch die erste Schnittstelle (IF1) ein erstes Betriebssystem, insbesondere Jaca Card Runtime Environment, und durch die zweite Schnittstelle (IF2) ein zweites Betriebssystem, insbesondere DESFire, verwendet wird, welche zur Unterbrechung des ersten Java-bezogenen Kommandos (K1) voneinander separiert werden oder gegenseitig verriegelt werden.

11. Tragbarer Datenträger, insbesondere Java Card, der dazu ausgebildet ist, ein erstes, Java-gebundenes Kommando einer Anwendungsapplikation für die Ausführung eines zweiten Kommandos (K2) einer anderen Anwendungsapplikation zu unterbrechen, wenn das zweite Kommando (K2) ein nicht Java-gebundenes Kommando ist.

12. Datenträger nach Anspruch 11, der eine erste Schnittstelle (IF1) und eine zweite Schnittstelle (IF2) aufweist, wobei der ersten Schnittstelle (IF1) eine erste, niedrige Priorität und der zweiten Schnittstelle (IF2) eine zweite, hohe Priorität zugewiesen ist, wobei dem Datenträger das erste, Java-gebundene Kommando (K1) über die erste Schnittstelle (IF1) und das zweite, nicht Java-gebundene Kommando (K2) über die zweite Schnittstelle (IF2) zuführbar ist.

13. Datenträger nach Anspruch 11 oder 12, der dazu ausgebildet ist, das Verfahren gemäß einem der Ansprüche 2 bis 10 auszuführen.
